Europäisches Patentamt

European Patent Office

Office européen des brevets

(11) Publication number: **0 156 484**
**B1**

(12) **EUROPEAN PATENT SPECIFICATION**

(45) Date of publication of patent specification: **19.07.89**

(51) Int. Cl.⁴: **F 16 B 4/00,** F 01 D 5/00,
F 02 F 7/00

(21) Application number: **85300974.4**

(22) Date of filing: **14.02.85**

(54) Metal ceramics composite article and a method of producing the same.

(30) Priority: **29.03.84 JP 59524/84**
**03.08.84 JP 162790/84**
**15.08.84 JP 169254/84**

(43) Date of publication of application:
**02.10.85 Bulletin 85/40**

(45) Publication of the grant of the patent:
**19.07.89 Bulletin 89/29**

(84) Designated Contracting States:
**DE FR GB IT SE**

(56) References cited:
**EP-A-0 139 406**
**EP-A-0 142 334**
**DE-A-2 734 747**
**DE-C- 897 377**
**GB-A-1 394 919**

(73) Proprietor: **NGK INSULATORS, LTD.**
**2-56, Suda-cho, Mizuho-ku**
**Nagoya-shi, Aichi 467 (JP)**

(72) Inventor: **Tsuno, Nobuo**
**505-105, 3-6 Iwanaridai 8-chome**
**Kasugai City (JP)**
Inventor: **Matsui, Minoru**
**93, Yashirodai 1-chome**
**Meito-Ku Nagoya City (JP)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

# EP 0 156 484 B1

**Description**

The present invention relates to a metal-ceramics composite article and a method of producing the same, and more particularly relates to a metal-ceramics composite article comprising a metal and a ceramics bonded to each other by fitting, and a method of producing the same.

Ceramics are hard and have excellent wear resistance, and furthermore have excellent mechanical strength and corrosion resistance at high temperatures. Therefore, ceramics are suitable to be used as a structural material for a gas turbine rotor and a turbocharger rotor, which are required to have high mechanical strength and wear resistance at high temperatures.

The use of ceramics in gas turbine rotors and turbocharger rotors has been investigated. For example, US—A—4,396,445 discloses a turbine rotor whose blade and shaft are made of ceramics. In the turbine rotor of this structure, a threaded portion is formed at one end of the ceramic shaft, and a metallic impeller of a compressor is fixed thereto. However, the turbine rotor of this structure has a drawback that the threaded portion of the ceramic shaft is broken during the use of the turbine rotor due to the difference of the coefficients of thermal expansion between the metallic material which constitutes the impeller of the compressor, and the ceramic material which constitutes the shaft of the turbine rotor. Moreover, a difficult technique, a long time and a high cost are required in the working for forming threads in the ceramic shaft. In order to overcome these drawbacks, Japanese Utility Model Application Laid-open Specification No. 92,097/82 discloses a turbine rotor having a structure in which a ceramic shaft is fitted into a hollow cylindrical portion formed at the end of a metallic shaft. However, this structure has a drawback that, when the ceramic shaft is fitted into the metallic hollow cylinder, whose outer surface has previously been hardened in order to improve the wear resistance of the contacting portion of the metallic shaft surface with a bearing, cracks are formed in the hardened surface portion. Further, when a hardening treatment, such as nitriding or the like, is carried out on the surface of a metallic shaft after the ceramic shaft has been fitted into the metallic shaft, the tightness in the fitted portion is decreased or the ceramic shaft is separated from the metallic shaft. Furthermore, when a ceramic shaft is fitted into a metallic shaft, and then the metallic shaft is subjected to a quenching treatment, the ceramic shaft is separated from the metallic shaft due to the phase transformation of the metallic shaft caused by the quenching. Therefore, in the above described structure, the wear resistance of the contacting portion of the metallic shaft surface with a bearing is poor, and the structure cannot be made practically available.

DE—A—2 734 747 also discloses a metal-ceramics composite article having a projection of the ceramic member fitted into a hole in the metallic member.

The object of the present invention is to provide a metal-ceramics composite article comprising a metallic member and a ceramic member bonded to each other with high bonding strength, which metallic member has high wear resistance in a predetermined portion.

The present invention is set out in claims 1 and 8.

By their investigations, the inventors have found that the use of a metallic member having a hardened region and an unhardened region, particularly an unhardened region having a hardness of Hv 250—450 at its surface, with the fitting region located at the unhardened region can produce a metal-ceramics composite article having a high bonding strength between the metallic member and the ceramic member, even in the case where the wall thickness forming the hole of the metallic member is small.

Preferably, therefore, the unhardened region has a hardness of Hv 250—450 in the metallic member of the metal-ceramics composite article of the present invention.

Further explanation and embodiments of the invention will now be given in greater detail with reference to the accompanying drawings, in which:

Fig. 1 is a longitudinal view, partly in section, of a metal-ceramics composite article of the present invention;

Fig. 2 is an explanatory view, partly in section, illustrating a pulling test for the metal-ceramics composite article of the present invention; and

Fig. 3 is an explanatory view, partly in section, illustrating a press-fitted portion of a ceramic member into a metallic member in a turbocharger rotor embodying the present invention.

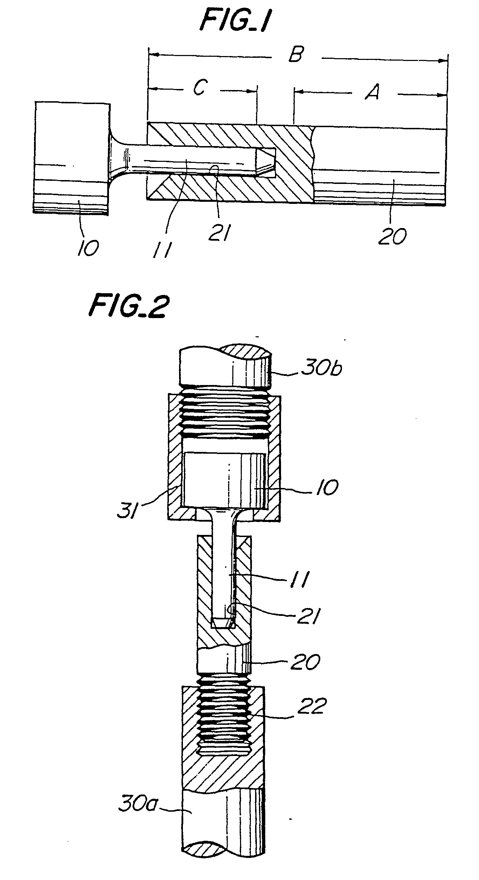

The metal-ceramics composite article of the present invention comprises, as illustrated in Fig. 1, a metallic member 20 having a hole 21 and a ceramic member 10 having a projection 11, the projection of the ceramic member having been fitted into the hole of the metallic member.

In the method aspect of the present invention, a projection formed on a ceramic member is fitted into a hole formed in a metallic member having a hardened region on a part of its surface to bond the metallic member to the ceramic member. The hardening treatment of the surface of the metallic member is for example carried out on that portion of the metallic member surface which is worn by friction or sliding by other machine parts during the use of the composite article. By this surface-hardening treatment, a hardened layer is formed on the surface of the metallic member, and the wear resistance of that portion of the metallic member in the resulting metal-ceramics composite article is improved. As the method of surface-hardening, there can be used carburizing, nitriding, surface quenching, discharge hardening and the like. Among these hardening treatments, carburizing, nitriding and surface quenching are preferable, because they can form a hardened surface layer having a large thickness. Moreover, among various nitriding methods, the ion nitriding method is particularly preferable due to the reason that the area of the

2

surface to be hardened and the depth to be hardened can be easily controlled.

As described above with reference to the prior art, in the bonding of a ceramic member to a metallic member by fitting the projection of the ceramic member into the hole of the metallic member, the metallic member is deformed at the fitted portion in proportion to the dimensional difference between the projection and the hole. However, a hardened surface layer of the metallic member is brittle and cannot be plastically deformed. Therefore, when the hardened surface layer of the metallic member is plastically deformed by fitting, cracks are formed on the hardened surface layer. In order to obviate this drawback, in the metal-ceramics composite article of the present invention the deformation of the metallic member by fitting occurs in the unhardened region of the metallic member. That is, the surface of a metallic member is hardened so as to form a hardened surface region on the metallic member, which region is preferably spaced from the portion of the metallic member deformed by fitting. This spacing is determined depending upon the accuracy in the working of the ceramic and metallic members, the fitting method of the two members, the amount of the metallic member to be deformed, and the shape and dimension of both the members, so as not to cause cracks and other flaws in the hardened surface portion of the metallic member when the metallic member is deformed by fitting.

For example, when a projection of 7.0 mm diameter formed on a ceramic member is fitted into a hole of 6.8 mm inner diameter formed in a metallic member having a diameter of 9.3 mm, the distance between the hardened surface region and the portion deformed in the metallic member is preferably at least 1 mm, and particularly preferably at least 2 mm. When this distance of at least 2 mm is present, a particularly high accuracy is not required in the working of the two members at the portions to be fitted and in the determination of the position of the region to be hardened on the surface of the metallic member, and therefore the presence of at least 2 mm of this distance is particularly preferable. Howver, when the distance is less than 1 mm, it is necessary to work particularly accurately both the members at the portions to be fitted, and further to determine the position of the region to be hardened on the surface of the metallic member with a particularly high accuracy, and therefore the presence of less than 1 mm of the distance is not preferred for attaining the object of the present invention. The upper limit of the above described distance can be properly selected by taking into consideration the position of the portion, which is required to have a wear resistance, on the metallic member surface and the position of the portion to be deformed of the metallic member due to fitting. In this case, the position and area of the portion to be hardened of the metallic member surface are determined such that the position corresponds to the portion of the member which is required to have wear resistance, and the area is equal to or larger than the area which is required to have wear resistance. As the result, a metal-ceramics composite article having a high hardness in the predetermined surface portion of the metallic member and having no defects in the fitted portion can be obtained.

In the fitting of the ceramic member to the metallic member, interference fitting and the press fitting can be used. In the interference fit, the diameter of a projection formed on a ceramic member is worked into a diameter larger than the inner diameter of the hole formed in a metallic member, and one of the ceramic and metallic members to be fitted is heated or cooled to cause a dimensional difference between the members sufficiently large to enable fitting of the members, and the members are fitted to each other by utilizing the dimensional difference. Therefore, the interference fit is suitable in the fitting of a ceramic member and a metallic member having a large dimension in the fitting portion. Further, metal has generally a coefficient of thermal expansion higher than that of ceramics, and therefore the heating of a metallic member can cause a dimensional difference larger than that caused by the cooling of a ceramic member, and an interference fit wherein a metallic member is heated, can be operated more easily than the interference fit wherein the ceramic member is cooled. Therefore, the interference fit by heating a metallic member is superior to the interference fit by cooling a ceramic member. The dimensions in this interference fit are chosen such that the hole of the metallic member and the projection of the ceramic member are not broken after the fitting and further a high tightness required for the fitted portion in the use of the metal-ceramics composite article of the present invention can be obtained.

Press fitting is a method wherein a projection formed on a ceramic member is forcedly pressed and fitted under a load into a hole formed in metallic member and having an inner diameter smaller than the diameter of the above described projection. The dimensional difference between the diameter of the projection and the inner diameter of the hole is mainly absorbed by the elastic deformation and plastic deformation of the metallic member, and therefore it is not necessary to limit so strictly the finishing dimensional difference before press fitting between the diameter of the projection and the inner diameter of the hole as in the interference fit. Therefore, press fitting is more preferable than the interference fit as a method for fitting of ceramic and metallic members having a small dimension in the fitting portion. The shape and dimension of the hole formed in the metallic member and those of the projection formed on the ceramic member are such that the members are not broken due to the load acting on the hole and projection at the press fitting. Further, the dimensional difference between the diameter of the projection and the inner diameter of the hole should have such a value that the press fitted portion has a tightness sufficiently high enough to endure the use of the metal-ceramics composite article, and further that both the projection and the hole are not broken at the press fitting. Accordingly, the diameter of the projection formed on the ceramic member is preferred to be 1—10%, particularly preferred to be 1—5%, larger than the inner diameter of the hole formed in the metallic member depending upon the hardness of the unhardened region of the metallic member. When this dimensional difference is less than 1%, the tightness in the press-fitted portion is poor, and the projection of the ceramic member is often separated from the hole of the metallic member at the press-fitted portion during the use of the metal-ceramics composite article. When the dimensional difference is more than 10%, a high load is required for the press fitting, and the projection of the ceramic member or the hole of the metallic member is liable to be broken at the press fitting. Therefore, the dimensional difference of less than 1% or more than 10% is not preferable. Further, a stable bonding strength can be obtained by selecting a large dimensional difference for a metallic member having a low hardness in its unhardened region, or a small dimensional difference for a metallic member having a high hardness in its unhardened region. This press fitting may be effected at room temperature or by heating the metallic member or both the metallic member and the ceramic member. However, a method wherein both the members are heated and press fitted is most preferable. Because, when both members are heated, the deformation resistance of the metallic member is decreased and a press fitting can be effected under a low load, and therefore the members do not break during the press fitting, and further the tightness between both the members is increased due to the difference in the coefficient of thermal expansion between both the members during the cooling from the press-fitting temperature. When both the members are heated and press fitted, the press-fitting temperature is preferably not higher than the lower of the annealing temperature of the metallic member and the softening temperature of the hardened surface layer thereof, and not lower than the intended use temperature of the press-fitted portion. When the press-fitting temperature is higher than the annealing temperature of the metallic member, the internal stress developed in the metallic member by the press fitting is relaxed, and the tightness in the press-fitted portion is decreased. When the press-fitting temperature is higher than the softening temperature of the hardened surface layer, the effect of the surface-hardening treatment decreases. When the press-fitting temperature is lower than the use temperature of the press-fitted portion, if the temperature of the press-fitted portion rises up to the use temperature of the portion, the metallic member becomes slack at the press-fitted portion and decreases its tightness, because the metallic member generally has a coefficient of thermal expansion larger than that of the ceramic member. Therefore, a press-fitting temperature higher than the annealing temperature of metallic member, higher than the softening temperature of the hardened surface layer of the metallic member, or lower than the use temperature of the press-fitted portion should not be used.

In one method exemplifying the present invention, a ceramic member is bonded to a metallic member by a method in which a metallic member is heat treated to adjust its hardness to Hv 250—450, a part of the surface of the metallic member is subjected to a hardening treatment to form a hardened surface region on part of the surface, a hole is formed in the metallic member, a projection formed on the ceramic member is fitted into the hole of the metallic member. When the unhardened region of the metallic member of the metal-ceramics composite article of the present invention has a hardness lower than Hv 250, if the wall thickness forming the hole of the metallic member is small, the tightness in the fitted portion is poor. In contrast, when the unhardened region has a hardness higher than Hv 450, the metallic member is easily broken by the fitting. Therefore, it is not preferable to use a metallic member having hardness lower than Hv 250 or higher than Hv 450 in its unhardened region.

As the heat treatment for adjusting the hardness of the metallic member to the above described hardness, there may be used a quenching and tempering treatment or a precipitation-hardening treatment. This heat treatment can be carried out before or at the same time with the hardening treatment of the surface of the metallic member. When the heat treatment is carried out before the surface-hardening treatment of the metallic member, the tempering temperature is preferably not lower than the surface-hardening treatment temperature. When a metallic member, whose hardness had been adjusted by tempering the member at a temperature lower than the surface-hardening treatment temperature, is subjected to a surface-hardening treatment at a temperature not lower than the tempering temperature, the hardness of the unhardened portion in the interior of the metallic member decreases. When the tempering or the precipitation-hardening treatment is carried out concurrently with the surface-hardening treatment, a quenched metallic member or a solid solution treated metallic member is heated in a heating equipment having its inner atmosphere under an atmosphere for hardening the surface of the metallic member.

However, in the method just described, when the two members are heated and press fitted, the press-fitting temperature is preferably not higher than the lowest of the tempering temperature of the metallic member, the precipitation-hardening temperature thereof and the softening temperature of the hardened surface layer thereof, and is not lower than the intended use temperature of the press-fitted portion. When the press-fitting temperature is higher than the tempering temperature of the metallic member, the hardness of the unhardened portion of the surface of the metallic member is reduced and the tightness in the press-fitted portion decreases. When the press-fitting temperature is higher than the precipitation-hardening treatment temperature, the unhardened portion of the surface of the metallic member softens. When the press-fitting temperature is higher than the softening temperature of the hardened surface layer, the effect of the hardening treatment of the surface decreases. When the press-fitting temperature is lower than the use temperature of the press-fitted portion, if the temperature of the press-fitted portion rises up to the use temperature, the metallic member becomes slack at the press-fitted portion and decreases its tightness, because the metallic member generally has a coefficient of thermal expansion larger than that of the ceramic member. Therefore, a press-fitting temperature higher than the tempering temperature of metallic member, higher than the precipitation-hardening treatment temperature, higher than the softening temperature of the hardened surface layer of the metallic member, or lower than the use temperature of the press-fitted portion should not be used.

In general, the hardness of the unhardened region obtained by the quenching, tempering or precipitation-hardening of a metallic member is higher than that of the unhardened region obtained by the annealing of the metallic member.

The metal-ceramics composite article of the present invention produced by fitting a ceramic member into a metallic member is generally subjected to a finishing working and then used. Therefore, a metal portion, which is required to have a wear resistance during the use of the metal-ceramics composite article, must have a predetermined hardness in its surface even after the surface has been ground during the finishing working. However, the hardness of a metallic member surface and the variation of the hardness in a metallic member from its surface to its interior are dependent upon the kind of metal constituting the metallic member and the method and condition for hardening the surface of the metallic member. Therefore, the amount of the metallic member surface to be ground during the finishing working at the portion required to have a wear resistance during the use of the metal-ceramics composite article, is determined depending upon the predetermined hardness of the metallic member surface, the kind of metal constituting the metallic member, and the method and condition for hardening the metallic member surface. Alternatively, the kind of metal constituting a metallic member, and the method and condition for hardening a metallic member surface are determined depending upon the amount to be ground in the finishing working and the surface hardness of the above described metallic member surface.

As the metal of the metal-ceramics composite article of the present invention, there are used commercially available metals, whose surface can be hardened by carburizing, nitriding, surface quenching, discharge hardening, metal plating and the like. For example, when the surface hardening is carried out by nitriding, there are preferably used iron alloys containing chromium, such as stainless steel, alloy tool steel, nickel-chromium-molybdenum steel, chromium-molybdenum steel, aluminum-chromium-molybdenum steel and the like; and titanium, zirconium and alloys containing these elements. When the surface hardening is carried out by the ion nitriding, aluminium-chromium-molybdenum steel and stainless steel are preferably used because these alloy steels, after being iron nitrided, have a high surface hardness and further have a high hardness from the surface to a deep portion; and particularly aluminum-chromium-molybdenum steel is inexpensive and is most preferable.

The ceramics of the metal-ceramics composite article of the present invention may be selected from silicon nitride, silicon carbide, zirconia, alumina, beryllia, sialon and the like, depending upon the intended use of the article. For example, for a turbocharger rotor or gas turbine rotor, it is preferable to use silicon nitride or silicon carbide, which have excellent high-temperature strength and thermal shock resistance and have a low specific gravity, in the turbine wheel exposed to exhaust gas having a high temperature and in the rotary shaft connected to the turbine wheel.

The present invention will be illustrated in more detail with reference to the following examples and Figs. 1—3.

### Example 1

A silicon nitride round rod produced by a pressureless sintering method (hereinafter, silicon nitride produced by a pressureless sintering method is merely referred to as silicon nitride) was worked into a ceramic member 10 having a projection 11 having a diameter of 7.0 mm and a length of 25 mm and having a shape illustrated in Fig. 1. An annealed aluminum-chromium-molybdenum steel (JIS—SACM 645, hereinafter, referred to as nitriding steel) round rod having a diameter of 9.3 mm was worked into a metallic member 20 having at one end a blind hole 21 having an inner diameter of 6.8 mm and a depth of 15 mm, which had a shape illustrated in Fig. 1. Then, the metallic member was covered with a mild steel cover in a region extending from its end surface having the inlet of the hole to a position 17 mm distant from the end surface, and the remaining portion (region A in Fig. 1) of the outer surface of the metallic member was subjected to an ion nitriding treatment at 550°C for 20 hours in a mixed atmosphere consisting of equal amounts of nitrogen and hydrogen and kept under a pressure of 4 torr (the thus treated metallic member was referred to as metallic member A). Separately, the total area of the outer surface (region B in Fig. 1) of a second example of the above described metallic member was subjected to an ion nitriding treatment under the same condition as that in metallic member A (the thus treated metallic member was referred to as metallic member B).

By the ion nitriding treatment under the above described condition, the Vickers hardness of the nitrided surface portion of the nitriding steel was increased from the original hardness of Hv(0.1) 200 to Hv(0.1) 1,100. Further, the metallic member had a Vickers hardness of Hv(0.1) 700 at a depth of 0.2 mm from its surface.

The projection 11 of the ceramic member 10 was press fitted at 350°C into the hole 21 of each of the above described two kinds of metallic members 20 to produce metal-ceramics composite articles having a shape illustrated in Fig. 1. Due to this press fitting, the metallic member was deformed in its region (region C in Fig. 1) extending from its end surface having the inlet of the hole to a position 13 mm distant from the end surface, and the diameter of the metallic member in this region was increased by about 0.2 mm. When the outer surface of the deformed portion of the metallic member due to this press fitting was examined, there was no extraordinary change in the metal-ceramics composite article produced using metallic member A. However, in the metal·ceramics composite article produced using metallic member B, a large number of cracks having a length of about 10 mm and a depth of about 0.5 mm were observed along the axial direction of the metallic member.

As described above, when the hardened surface portion of a metallic member is deformed by press fitting, cracks are formed on the metallic member surface, and a satisfactory metal-ceramics composite article cannot be obtained. In contrast, in the metal-ceramics composite article of the present invention, which has been produced by using metallic member A having a surface which has not been hardened at the portion to be deformed by press fitting, cracks are not formed on the metallic member surface when the metallic member is deformed by press fitting.

### Example 2

A ceramic member and metallic member having the same shapes as those used in Example 1 were produced from the same starting materials as those used in Example 1. The metallic member was covered with a mild steel cover on its outer surface in a region extending from its end surface having the inlet of the hole formed therein to a position 13.5 mm (in metallic member C), 14.5 mm (in metallic member D) or 15.5 mm (in metallic member E) distant from the end surface, and the remaining region of the outer surface of the metallic member was subjected to an ion nitriding treatment under the same condition as described in Example 1 to produce three metallic members C, D and E. Into the hole of each of these three kinds of metallic members was press fitted at 350°C the projection of the ceramic member to produce metal-ceramics composite articles illustrated in Fig. 1. By this press fitting, each of the metallic members was deformed in the region from its end surface having the inlet of the hole to a position 13 mm distant from the end surface, and the outer diameter of the metallic member was increased in this region. When the deformed portion of the metallic member due to the press fitting, and the outer surface of the metallic member in the vicinity of the deformed portion was examined, no cracks were observed on the outer surface of metallic members D and E, but a crack having a length of about 2 mm and a depth of about 0.2 mm was observed in metallic member C along its axial direction in the vicinity of the boundary between the ion nitrided portion and the un-nitrided portion. Thus when the region deformed by press fitting in the metallic member and the hardened surface region of the metallic member are spaced from each other by more than a predetermined distance, cracks are not formed on the metallic member surface when the metallic member is deformed due to press fitting.

### Example 3

A silicon nitride round rod was worked into a ceramic member 10 having a shape illustrated in Fig. 1, which had a projection 11 having a diameter shown in the following Table 1 and having a length of 25 mm. Separately, an annealed nitriding steel round rod was worked into a round rod-shaped test piece having a diameter of 9.3 mm and a length of 80 mm, and the test piece was covered with a mild steel cover in a region extending from one end to a position 17 mm distant from the end, and the remaining portion of the surface of the test piece was hardened by ion nitriding treatment under the same condition as described in Example 1. Then, the test piece was worked into a metallic member 20 having a shape illustrated in Fig. 1, which had a hole 21 at the unhardened side of the test piece, said hole 21 having a diameter shown in Table 1 and a depth of 15 mm. Into the hole 21 of this metallic member 20 was fitted at 350°C the above described projection 11 of the ceramic member 10 to produce a metal-ceramics composite article illustrated in Fig. 1.

Then, the outer diameter of the metallic member 20 of the resulting metal-ceramics composite article was worked to 9.1 mm, and screw threads 22 having a predetermined dimension were formed at the end portion of the metallic member 20. As illustrated in Fig. 2, the ceramic member 10 was held by a clamping device 31, which had been threadedly engaged with one rod 30b of pull rods for a pulling test and the screw threads 22 were threadedly engaged with another pull rod 30a for the pulling test. Then, the metal-ceramics composite article held by the pull rods as illustrated in Fig. 2 was placed in a heating furnace and heated up to 350°C, and the ceramic member 10 and metallic member 20 were pulled in up and down directions while keeping the press-fitted portion at 350°C, and the load required for separating the ceramic member from the metallic member at the press-fitted portion was measured. The results obtained are shown in Table 1.

In Table 1, sample Nos. 1—6 are metal-ceramics composite articles in which the dimensional difference between the diameter of the projection formed on a ceramic member and the inner diameter of the hole formed in a metallic member is within the preferred range defined in the present invention, and sample Nos. 101—103 are the composite articles, wherein the dimensional difference is outside the preferred range defined in the present invention. It can be seen from Table 1 that, in a metal-ceramics composite article wherein the above described dimensional difference is within the preferred range of the present invention, a high load is required for separating the ceramic member from the metallic member at 350°C. In contrast, in a metal-ceramics composite article wherein the above described dimensional difference is smaller than the lower limit of the preferred range of the present invention, the load required for the separation is low. Further, in a metal-ceramics composite article (sample No. 103) wherein the dimensional difference is larger than the upper limit of the preferred range of the present invention, the projection of the ceramic member is broken during the press fitting of the projection into the hole of the metallic member in spite of the fact that the metallic member of sample No. 103 has the same wall thickness forming a hole of the metallic member as the wall thickness forming a hole of the metallic members of other samples before press fitting.

Table 1

|  | Sample No. | Diameter of a projection formed on ceramic member (mm) | Inner diameter of a hole formed in metallic member (mm) | Dimensional difference (%) | Wall thickness forming a hole of metallic member before press fitting (mm) | Press-fitting temperature (°C) | Load for Press fitting | separation (kg) |
|---|---|---|---|---|---|---|---|---|
| Preferred composite articles of this invention | 1 | 6.9 | 6.8 | 1.5 | 1.25 | 350 | Y | 130 |
|  | 2 | 7.0 | 6.8 | 2.9 | 1.25 | 350 | Y | 270 |
|  | 3 | 7.1 | 6.8 | 4.4 | 1.25 | 350 | Y | 280 |
|  | 4 | 7.2 | 6.8 | 5.9 | 1.25 | 350 | Y | 283 |
|  | 5 | 7.3 | 6.8 | 7.4 | 1.25 | 350 | Y | 280 |
|  | 6 | 7.4 | 6.8 | 8.8 | 1.25 | 350 | Y | 280 |
| Comparative composite article | 101 | 6.84 | 6.8 | 0.6 | 1.25 | 350 | Y | 20 |
|  | 102 | 6.86 | 6.8 | 0.9 | 1.25 | 350 | Y | 40 |
|  | 103 | 7.5 | 6.8 | 10.3 | 1.25 | 350 | N | - |

Y : press fitting is possible

N : press fitting is impossible

## Example 4

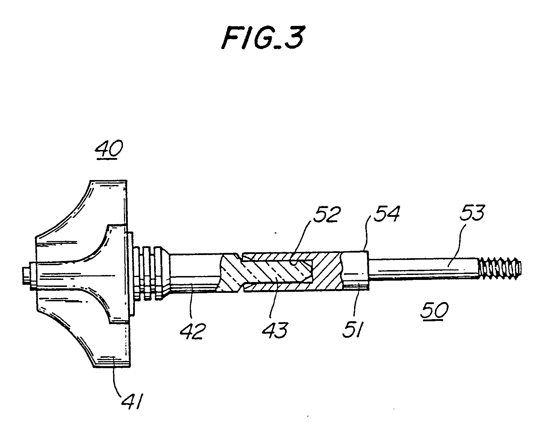

A ceramic member 40 having a total length of 60 mm, which had a monolithic structure consisting of a turbine wheel 41 having a diameter of 61 mm and a turbine shaft 42 having a diameter of 9.1 mm, was produced from silicon nitride. The tip of the turbine shaft of the ceramic member was worked into a projection 43 having a diameter of 6 mm and a length of 13 mm. Separately, a nitriding steel round rod having a total length of 70 mm and a diameter of 9.1 mm was produced, and covered with a mild steel cover in a region extending from one end of the round rod to a position 13 mm distant from the end, and the remaining portion of the surface of the rod was hardened by an ion nitriding treatment under the same condition as described in Example 1. Then, a hole 52 having an inner diameter of 5.8 mm and a depth of 12 mm was formed at the end in the unhardened portion of the round rod to produce a metallic member 50. Into this hole 52 was press fitted the projection 43 formed at the tip of the above described turbine shaft at 350°C, which is not lower than the use temperature of the fitted portion, to bond the ceramic member 40 with the metallic member 50. Then, the diameters of the ceramic turbine shaft 42 and the metallic turbine shaft 51 of the resulting assembly were worked to 9.0 mm, and the diameter of the rotary shaft 53 in the compressor wheel side of the assembly was worked to 5 mm to produce a turbocharger rotor having a shape illustrated in Fig. 3, wherein its turbine wheel and a part of its turbine shaft were made of silicon nitride, and the remaining portion of its turbine shaft was made of nitriding steel. When this turbocharger rotor was placed in a high-temperature rotary tester and a rotation test was effected at a rate of 150,000 rpm for 1 hour by a combustion gas, no extraordinary change was observed in the fitted portion of the ceramic and metallic members, and in the bearing contacting surface 54 of the metallic turbine shaft.

## Example 5

A silicon nitride round rod was worked into a ceramic member 10 having a shape illustrated in Fig. 1, which had a projection 11 having a diameter of 7.90 mm and a length of 25 mm. Separately, a nitriding steel round rod, whose hardness had previously been adjusted to a hardness shown in sample Nos. 7—11 in the following Table 2 through quenching and tempering, was worked into a round rod-shaped test piece having a diameter of 9.3 mm and a length of 80 mm. A hole 21 having an inner diameter of 7.75 mm and a depth of 15 mm was formed at one end of the test piece to produce a metallic member 20 having a shape illustrated in Fig. 1. Another nitriding steel round rod, whose hardness had previously been adjusted to Hv 300 through a quenching followed by a tempering at 680°C, was worked into a round rod-shaped test piece having a diameter of 9.3 mm and a length of 80 mm, and the test piece was covered with a mild steel cover in a region extending from one end to a position 15 mm distant from the end, and the remaining portion of the surface of the test piece was hardened by the ion nitriding treatment under the same condition as described in Example 1. By the above described treatment, a test piece having a hardness of Hv 1,100 in the nitrided surface portion and a hardness of Hv 300 in the un-nitrided surface portion was obtained. The hardness of the un-nitrided surface portion of the test piece was not changed even in the heat treatment for the nitriding. Then, a hole 21 having an inner diameter shown in sample Nos. 12—16 in Table 2 and a depth of 15 mm was formed at one end in the unhardened side of the test piece to produce a metallic member 20 having a shape illustrated in Fig. 1.

Into the hole 21 of each metallic member 20 was press fitted at 350°C the projection 11 of the ceramic member 10 to produce a metal-ceramics composite article. By this press fitting, the metallic member was deformed over a range ranging from its end surface having the inlet of the hole to a position 13 mm distant from the end surface.

The pulling test of the resulting metal·ceramics composite article was carried out in the same manner as described in Example 3. The obtained results are shown in Table 2.

In Table 2, sample Nos. 7—11 are metal-ceramics composite articles, wherein the hardness of the unhardened region of metallic member is within the range Hv 250—450; sample Nos. 12—16 are metal-ceramics composite articles, wherein the dimensional difference between the diameter of the projection of the ceramic member and the inner diameter of the hole of the metallic member is within the preferred range defined in the present invention; sample Nos. 104 and 105 are metal-ceramics composite articles, wherein the hardness of the unhardened region of the metallic member is outside the range Hv 250—450; and sample Nos. 106 and 107 are metal-ceramics composite articles, wherein the above described dimensional difference is outside the preferred range defined in the present invention.

Table 2

| | Sample No. | Diameter of a projection formed on ceramic member (mm) | Inner diameter of a hole formed in metallic member (mm) | Dimensional difference (%) | Wall thickness forming a hole of metallic member after finishing work (mm) | Hardness of metallic member (Hv) | Press-fitting temperature (°C) | Press fitting | Load for separation (kg) |
|---|---|---|---|---|---|---|---|---|---|
| Preferred composite articles of this invention | 7 | 7.90 | 7.75 | 1.9 | 0.6 | 260 | 350 | Y | 103 |
| | 8 | 7.90 | 7.75 | 1.9 | 0.6 | 300 | 350 | Y | 200 |
| | 9 | 7.90 | 7.75 | 1.9 | 0.6 | 350 | 350 | Y | 320 |
| | 10 | 7.90 | 7.75 | 1.9 | 0.6 | 400 | 350 | Y | 480 |
| | 11 | 7.90 | 7.75 | 1.9 | 0.6 | 450 | 350 | Y | 650 |
| | 12 | 7.90 | 7.75 | 1.9 | 0.6 | 300 | 350 | Y | 200 |
| | 13 | 7.90 | 7.61 | 3.8 | 0.6 | 300 | 350 | Y | 330 |
| | 14 | 7.90 | 7.42 | 6.4 | 0.6 | 300 | 350 | Y | 540 |
| | 15 | 7.90 | 7.34 | 7.7 | 0.6 | 300 | 350 | Y | 620 |
| | 16 | 7.90 | 7.25 | 9.0 | 0.6 | 300 | 350 | Y | 680 |
| Comparative composite article | 104 | 7.90 | 7.75 | 1.9 | 0.6 | 220 | 350 | Y | 65 |
| | 105 | 7.90 | 7.75 | 1.9 | 0.6 | 480 | 350 | N | - |
| | 106 | 7.90 | 7.83 | 0.9 | 0.6 | 300 | 350 | Y | 80 |
| | 107 | 7.90 | 7.15 | 10.5 | 0.6 | 300 | 350 | N | - |

Y : press fitting is possible
N : press fitting is impossible

EP 0 156 484 B1

It can be seen from Table 2 that, in the metal-ceramics composite articles, wherein the hardness of the unhardened region of the metallic member is within the range Hv 250—450, and the dimensional difference between the inner diameter of the hole of the metallic member and the diameter of the projection of the ceramic member is within the preferred range of the present invention, a very high load is required for the separation of the ceramic member from the metallic member at 350°C. This load required for the separation increases corresponding to the lowering of the pulling temperature, and therefore a load higher than the load described in Table 2 is required for the separation when the temperature of the fitted portion is lower than 350°C. In contrast, when the hardness of the unhardened region of the metallic member is lower than Hv 250 the separation load is low, and when this hardness is higher than Hv 450, the hole of the metallic member is broken by the press fitting. Similarly, when the dimensional difference between the inner diameter of the hole formed in the metallic member and the diameter of the projection formed on the ceramic member is smaller than the lower limit of the preferred range of the present invention, the load required for the separation is low; and when this dimensional difference is larger than the upper limit of the preferred range of the present invention, the hole of the metallic member or the projection of the ceramic member are broken by the press fitting.

Further, Table 2 illustrates the following fact. When the unhardened region of the metallic member has an extremely low hardness of Hv 220 (sample No. 104) or an extremely high hardness of Hv 480 (sample No. 105), the object of the present invention may not be attained in spite of the fact the dimensional difference is within the preferred range defined in the present invention.

Example 6

A turbocharger rotor having a shape illustrated in Fig. 3, wherein its turbine wheel and a part of its turbine shaft were made of silicon nitride, and the remaining portion of its turbine shaft was made of nitriding steel, was produced in the same manner as described in Example 4, except that a nitriding steel having a hardness previously adjusted to Hv 350 by a heat treatment was used as a metallic member 50, the metallic member had a hole having an inner diameter of 7.7 mm and a depth of 12 mm, and a ceramic member had a projection of 7.9 mm diameter and 13 mm length. When this turbocharger rotor was placed in a high-temperature rotary tester and a rotation test was effected at a rate of 150,000 rpm for 100 hours, no extraordinary change was observed in the fitted portion of the ceramic member and the metallic member, and in the bearing contacting surface 54 of the metallic turbine shaft.

The above examples show that the article of the present invention is preferably produced by fitting a projection formed on a ceramic member into a hole formed in a metallic member having a hardened surface in a predetermined region, which projection has a diameter 1—10% larger than the inner diameter of the hole. The resultant composite article has a high bonding strength in this fitted portion and has a high wear resistance in the predetermined portion of the metallic member. Accordingly, when a turbocharger rotor for example is produced in this manner such that its turbine wheel and a part of its turbine shaft consist of silicon nitride and the remaining portion of its turbine shaft consists of nitriding steel, the resulting turbocharger rotor is excellent in responsibility and durability and is high in efficiency.

Further, the examples show that when a metallic member having a preferred hardness of Hv 250—450 in its unhardened region is used in the production of a metal-ceramics composite article of the present invention, a high bonding strength can be obtained in the fitted portion of the projection of the ceramic member and the hole of the metallic member even in the case where the wall thickness forming the hole of the metallic member is small, and therefore the diameter of the projection of the ceramic member can be larger, and the strength of the projection increases, and further the reliability of the fitted portion increases.

As described above, the metal-ceramics composite article of the present invention can be used in engine parts, such as turbocharger rotor, gas turbine rotor and the like, and other structural parts exposed to high temperature or to repeating loads, by utilizing the heat resistance, wear resistance and high strength of the ceramics. These engine parts and structural parts having a high durability can be produced inexpensively.

**Claims**

1. A metal-ceramics composite article, comprising a metallic member (20, 50) having a hole (21, 52) formed therein and a ceramic member (10, 40) having a projection (11, 43), the projection (11, 43) of the ceramic member (10, 40) having been fitted into the hole (21, 52) of the metallic member (20, 50) to bond the ceramic member (10, 40) to the metallic member (20, 50), characterized in that the metallic member (20, 50) has a hardened region and an unhardened region on its surface, and the region of the metallic member (20, 50) deformed due to the fitting is located within its unhardened region.

2. A metal-ceramics composite article according to claim 1, wherein the unhardened region has a hardness of Hv 250—450.

3. A metal-ceramics composite article according to claim 1 or claim 2 wherein the deformed region is spaced from the hardened region.

4. A metal-ceramics composite article according to any one of claims 1 to 3 wherein the hardened region is formed by an ion nitriding method.

10

5. A metal-ceramics composite article according to any one of claims 1 to 4 wherein the metallic member (20, 50) is nitriding steel and the ceramic member (10, 40) is silicon nitride.

6. A metal-ceramics composite article according to any one of claims 1 to 5 wherein the metallic member (20, 50) is selected from stainless steel, alloy tool steel, chromium-molybdenum steel and aluminium-chromium-molybdenum steel, and the ceramics member (10, 40) is selected from silicon nitride and silicon carbide.

7. A metal-ceramics composite article according to any one of claims 1 to 6 which is a turbocharger rotor.

8. A method of producing a metal-ceramics composite article, comprising forming a hole in a metallic member (20, 50), fitting a projection (11, 43) formed on a ceramic member (10, 40) into the hole (21, 52) of the metallic member so that the ceramic member (10, 40) is bonded to the metallic member (20, 50), characterized in that prior to the fitting of the projection into the hole, a part of the surface of a metallic member (20, 50) is subjected to a hardening treatment to form a hardened region on a part of the surface and the region of the metallic member (20, 50) deformed due to the fitting is located within its unhardened region.

9. A method according to claim 8, wherein the metallic member (20, 50) is heat treated to adjust its hardness to Hv 250—450 before said part of the surface of the metallic member (20, 50) is subjected to the hardening treatment and the hole (21, 52) is formed in the metallic member (20, 50) after said hardening treatment.

10. A method according to claim 8 or claim 9 wherein the fitting is a press fitting carried out at a temperature not higher than the lower of the annealing temperature of the metallic member and the softening temperature of the hardened surface layer thereof but not lower than the highest intended use temperature of the press-fitted portion.

11. A method according to any one of claims 8 to 10 wherein the diameter of the projection on the ceramic member (10, 40) is larger by 1—10% than the inner diameter of the hole formed in the metallic member (20, 50).

12. A method according to any one of claims 8 to 11 wherein the hardening treatment is an ion nitriding treatment.

13. A method according to any one of claims 8 to 11 wherein the heat treatment is a combination of quenching and tempering at a temperature not lower than the surface-hardening treatment temperature.

14. A method according to any one of claims 8 to 11 wherein the quenched metallic member (20, 50) is heated up to a nitriding treatment temperature under a nitriding atmosphere, to effect concurrently the hardening treatment of a part of the metallic member (20, 50) surface and the tempering treatment of the metallic member (20, 50).

15. A method according to claim 8 or claim 9, wherein the fitting is a press fitting carried out at a temperature not higher than the tempering temperature of the metallic member but not lower than the highest intended use temperature of the fitted portion.

**Patentansprüche**

1. Metall-Keramik-Verbundkörper, der umfaßt ein metallisches Element (20, 50) mit einem darin erzeugten Loch (21, 52) und ein keramisches Element (10, 40) mit einem Fortsatz (11, 43), wobei der Fortsatz (11, 43) des keramischen Elements (10, 40) in das Loch (21, 52) des metallischen Elements (20, 50) eingepaßt ist, so daß das keramische Element (10, 40) mit dem metallischen Element (20, 50) verbunden ist, dadurch gekennzeichnet, daß das metallische Element (20, 50) auf seiner Oberfläche einen gehärteten Bereich und einen ungehärteten Bereich aufweist und daß der Bereich des metallischen Elements (20, 50), der beim Einpassen verformt wird, innerhalb seines ungehärteten Bereiches liegt.

2. Metall-Keramik-Verbundkörper nach Anspruch 1, bei dem der ungehärtete Bereich eine Härte Hv von 250 bis 450 hat.

3. Metall-Keramik-Verbundkörper nach Anspruch 1 oder 2, bei dem der verformte Bereich in einem Abstand von dem gehärteten Bereich angeordnet ist.

4. Metall-Keramik-Verbundkörper nach einem der Ansprüche 1 bis 3, bei dem der gehärtete Bereich durch eine Ionennitrierbehandlung erzeugt ist.

5. Metall-Keramik-Verbundkörper nach einem der Ansprüche 1 bis 4, bei dem das metallische Element (20, 50) aus Nitrierstahl ist und das keramische Element (10, 40) aus Siliciumnitrid ist.

6. Metall-Keramik-Verbundkörper nach einem der Ansprüche 1 bis 5, bei dem das metallische Element (20, 50) ausgewählt wird aus rostfreiem Stahl, Legierungswerkzeugstahl, Chrom-Molybdän-Stahl und Aluminium-Chrom-Molybdän-Stahl und das keramische Element (10, 40) ausgewählt wird aus Siliciumnitrid und Siliciumcarbid.

7. Metall-Keramik-Verbundkörper nach einem der Ansprüche 1 bis 6, dadurch gekennzeichnet, daß es sich dabei um einen Turboladerrotor handelt.

8. Verfahren zur Herstellung eines Metall-Keramik-Verbundkörpers, das umfaßt die Erzeugung eines Loches in einem metallischen Element (20, 50), das Einpassen eines Fortsatzes (11, 43), der auf einem keramischen Element (10, 40) erzeugt worden ist, in das Loch (21, 52) des metallischen Elements, so daß das keramische Element (10, 40) mit dem metallischen Element (20, 50) verbunden ist, dadurch gekennzeichnet, daß vor dem Einpassen des Fortsatzes in das Loch ein Teil der Oberfläche eines metallischen Elements (20, 50) einer Härtungsbehandlung unterzogen wird zur Ausbildung eines gehärteten Bereiches auf einem Teil der Oberfläche und der Bereich des metallischen Elements (20, 50), der beim Einpassen verformt wird, innerhalb dieses ungehärteten Bereiches liegt.

9. Verfahren nach Anspruch 8, bei dem das metallische Element (20, 50) wärmebehandelt wird, um seine Härte auf einem Wert Hv von 250 bis 450 zu bringen, bevor dieser Teil der Oberfläche des metallischen Elements (20, 50) der Härtungsbehandlung unterzogen wird, und das Loch (21, 52) in dem metallischen Element (20, 50) nach dieser Härtungsbehandlung erzeugt wird.

10. Verfahren nach Anspruch 8 oder 9, bei dem das Einpassen ein Einpassen unter Druck ist, das bei einer Temperatur durchgeführt wird, die nicht höher ist als der niedrigere Wert aus der Glühtemperatur des metallischen Elements und der Erweichungstemperatur der gehärteten Oberflächenschicht desselben, die jedoch nicht niedriger ist als die höchste vorgesehene Verwendungstemperatur des unter Druck eingepaßten Abschnittes.

11. Verfahren nach einem der Ansprüche 8 bis 10, bei dem der Durchmesser des Fortsatzes auf dem keramischen Element (10, 40) um 1 bis 10% größer ist als der innere Durchmesser des in dem metallischen Element (20, 50) erzeugten Loches.

12. Verfahren nach einem der Ansprüche 8 bis 11, bei dem die Härtungsbehandlung eine Ionen-nitrierbehandlung ist.

13. Verfahren nach einem der Ansprüche 8 bis 11, bei dem die Wärmebehandlung eine Kombination aus einem Abschrecken und Tempern bei einer Temperatur ist, die nicht niedriger ist als die Oberflächenhärtungsbehandlungstemperatur.

14. Verfahren nach einem der Ansprüche 8 bis 11, bei dem das abgeschreckte metallische Element (20, 50) unter einer nitrierenden Atmosphäre auf eine Nitrierbehandlungstemperatur erhitzt wird, um gleichzeitig eine Härtungsbehandlung eines Teils der Oberfläche des metallischen Elements (20, 50) und eine Temperungsbehandlung des metallischen Elements (20, 50) durchzuführen.

15. Verfahren nach Anspruch 8 oder 9, bei dem das Einpassen ein Einpassen unter Druck ist, das bei einer Temperatur durchgeführt wird, die nicht höher ist als die Temperungstemperatur des metallischen Elements, die jedoch nicht niedriger ist als die höchste vorgesehene Verwendungstemperatur des eingepaßten Abschnittes.

## Revendications

1. Produit composite métal-céramique, comprenant un élément métallique (20, 50) ayant un trou (21, 52) qui y est formé et un élément céramique (10, 40) ayant une protubérance (11, 43), la protubérance (11, 43) de l'élément céramique (10, 40) ayant été fixée dans le trou (21, 52) de l'élément métallique (20, 50) pour lier l'élément céramique (10, 40) à l'élément métallique (20, 50), caractérisé en ce que l'élément métallique (20, 50) a une région durcie et une région non durcie à sa surface et la région de l'élément métallique (20, 50) déformée du fait de la fixation est placée dans sa région non durcie.

2. Produit composite métal-céramique selon la revendication 1, où la région non durcie a une dureté de Hv 250—450.

3. Produit composite métal-céramique selon la revendication 1 ou la revendication 2, où la région déformée est espacés de la région durcie.

4. Produit composite métal-céramique selon l'une des revendications 1 à 3, où la région durcie est formée par une méthode de nitruration ionique.

5. Produit composite métal-céramique selon l'une des revendications 1 à 4, où l'élément métallique (20, 50) est de l'acier se nitrurant et l'élément céramique (10, 40) est du nitrure de silicium.

6. Produit composite métal-céramique selon l'une des revendications 1 à 5, où l'élément métallique (20, 50) est choisi parmi l'acier inoxydable, l'acier à outils allié, un acier au chrome-molybdène et un acier à l'aluminium-chrome-molybdène, et l'élément céramique (10, 40) est choisi parmi le nitrure de silicum et le carbure de silicium.

7. Produit composite métal-céramique selon l'une des revendications 1 à 6, qui est un rotor de turbocompresseur.

8. Procédé de fabrication d'un produit composite métal-céramique, consistant à former un trou dans un élément métallique (20, 50), à fixer une protubérance (11, 43) formée sur un élément céramique (10, 40) dans le trou (21, 52) de l'élément métallique de manière que l'élément céramique (10, 40) soit lié à l'élément métallique (20, 50), caractérisé en ce qu'avant la fixation de la protubérance dans le trou, une partie de la surface d'un élément métallique (20, 50) est soumise à un traitement de durcissement pour former une région durcie sur une partie de la surface et la région de l'élément métallique (20, 50) qui est déformée du fait de la fixation est placée dans sa région non durcie.

9. Procédé selon la revendication 8, où l'élément métallique (20, 50) est traité thermiquement pour ajuster sa dureté à Hv 250—450 avant que ladite partie de la surface de l'élément métallique (20, 50) soit soumise au traitement de durcissement et le trou (21, 52) est formé dans l'élément métallique (20, 50) après ledit traitement de durcissement.

10. Procédé selon la revendication 8 ou la revendication 9, où la fixation est un ajustage à pression effectué à une température qui ne dépasse pas la plus basse de la température de recuit de l'élément

12

métallique ou de la température d'amollissement de sa couche durcie de surface mais pas plus basse que la plus haute température souhaitée d'utilisation de la portion ajustée à pression.

11. Procédé selon l'une des revendications 8 à 10, où le diamètre de la protubérance sur l'élément céramique (10, 40) est plus grand de 1—10% que le diamètre interne du trou formé dans l'élément métallique (20, 50).

12. Procédé selon l'une des revendications 8 à 11, où le traitement de durcissement est un traitement de nitruration ionique.

13. Procédé selon l'une des revendications 8 à 11, où le traitement thermique est une combinaison de trempe et de revenu à une température qui n'est pas inférieure à la température du traitement de durcissement de surface.

14. Procédé selon l'une des revendications 8 à 11, où l'organe métallique trempé (20, 50) est chauffé jusqu'à une température de traitement de nitruration sous une atmosphère nitrurante pour effectuer concurremment le traitement de durcissement d'une partie de la surface de l'élément métallique (20, 50) et le traitement de revenu de l'élément métallique (20, 50).

15. Procédé selon la revendication 8 ou la revendication 9, où la fixation est un ajustage à pression effectué à une température qui n'est pas plus haute que la température de revenu de l'élément métallique mais qui n'est pas plus basse que la plus haute température voulue d'utilisation de la portion fixée.

EP 0 156 484 B1

*FIG.1*

*FIG.2*

1

# FIG.3